# EUROPEAN PATENT SPECIFICATION

(11) **EP 0 375 816 B1**
(45) Date of publication and mention of the grant of the patent: **28.07.1993**
(21) Application number: 88312452.1
(22) Date of filing: 30.12.1988
(51) Int. Cl.: G01C 21/22

(54) **Navigation apparatus**
Navigationseinrichtung
Dispositif de navigation

(43) Date of publication of application: 04.07.1990
(73) Proprietor: AISIN AW CO., LTD., Anjo-shi Aichi-ken 444-11 (JP); KABUSHIKI KAISHA SHINSANGYOKAIHATSU, Tokyo 151 (JP)
(72) Inventor: Nimura, Mitsuhiro, Fujii-cho Anjo-shi Aichi-ken 444-11 (JP); Yokoyama, Shoji, Fujii-cho Anjo-shi Aichi-ken 444-11 (JP)
(74) Representative: Bubb, Antony John Allen

(56) References cited:
- WO-A-88/05199
- DE-A- 3 323 704
- DE-A- 3 429 882
- GB-A- 2 180 066
- PATENT ABSTRACTS OF JAPAN, vol. 11, no. 303 (P-622)[2750], 3rd October 1987; & JP-A-62 93 614 (MAZDA MOTOR CORP.) 30-04-1987

## Description

This invention relates to an apparatus for navigating a vehicle in accordance with a course set before travel starts. More particularly, the invention relates to a course guidance system in a navigation apparatus which informs a driver of characterising features encountered along the course.

Recent years have seen extensive development of vehicular navigation systems in which a course is preset before travel starts and the driver is given course information in accordance with the preset course.

DE-A-3 429882 discloses a system comprising a data store wherein position and direction guidance data relating to a plurality of points along a preset course is stored in advance, a further store wherein supplementary voice track guidance data relating to a plurality of points along the route is stored, means for measuring distance travelled by the vehicle, a direction sensor guidance information output means, means for determining a current position of the vehicle from signals received from the distance measuring means and the direction sensor, means for determining whether the distance remaining between the current position and the next point on the course is less than a predetermined value; and means for providing guidance information relating to the next point from the data store and the further store to the guidance information output means when the remaining distance is determined to be less than the predetermined value.

In this system it is necessary that information regarding the points on a preset course be stored in the data stores at the time of preparation of the preset course, so that it is not possible to employ a common data store in the form of a data base for more than one course to be navigated.

EP-A-0 120 195 discloses another system wherein guidance data relating to a preset course is stored and retrieved by comparison of the remaining distance calculated between a current position of the vehicle and a next point on the route. In addition a vehicle steering angle sensor is provided to enable logical confirmation of turning of the vehicle at an intersection to be obtained. However, once again the preset course of the vehicle must be known before guidance data can be stored, and thus a map data base applicable to more than one course of the vehicle cannot be used.

WO-A-88 05199 discloses a system of the kind having a data store wherein data is stored in the form of an electronic map. A preset course is determined by the input of starting and destination points and the position of the vehicle on the course is correlated to points on the map by calculation using distance and direction data from wheel sensors of the vehicle. Guidance information relating to a point on the map is output from the data store when the calculated position of the vehicle coincides therewith. In addition, security information appropriate to a particular section of the route is provided from an additional data store. In such an arrangement guidance and security information is provided in an arbitrary manner in relation to points on a route and no distinction is made between whether a point meriting guidance information is an intersection at which a decision on direction must be made, or an intermediate point.

In the arrangement of U.S.-A-4,660,037, when the driver is guided along a preset course, the navigation apparatus displays a map on the screen of a CRT and superimposes the course on the map. A characterising feature serving as a landmark in the vicinity of the present position of the vehicle is read, and it is necessary that the driver determine where his present travelling position is on the map and how far it is to a specific intersection. However, a highly detailed display cannot be presented on a small CRT of the type mounted in an automotive vehicle, and it is very difficult for the driver to read all of the necessary information while driving. Consequently, considerable attention must be paid in recognising intersections and, hence, a great burden is placed upon the driver.

PATENT ABSTRACTS OF JAPAN Vol. 11 No. 303 (P-622) [2750], 3.10.1987 discloses an arrangement wherein there are stored in a data store, in addition to a map, the actual images of predetermined points on the map and direction indication marks. In this case, when it is detected that the vehicle has approached one of the predetermined points on the map the image of the predetermined point and a direction indication mark are displayed on a display device in a superposed state.

Also, in EP-A-0375818 there is disclosed a system in which information relating to an intersection at which the next turn is to be made is indicated to the driver by a CRT screen and voice tracks in accordance with the preset course. In this system, a photograph and the name of the intersection at which the next turn is to be made, the distance to this intersection and the shape thereof, and whether a right or left turn is to be made are displayed on the CRT screen. Together with this visual indication, the distance to the intersection and the direction of advance from this intersection are announced by voice tracks.

With these arrangements, however, no course guidance is given until the vehicle has approached the vicinity of an intersection. Consequently, if the distance between one intersection at which a turn has been made and an intersection at which the next turn is to be made is great, the driver cannot verify whether the course presently being travelled on is correct, and the driver is constrained to drive the vehicle while constantly in an anxious state until the intersection requiring a turn is reached.

Accordingly, an object of the present invention is to provide a navigation apparatus in which a driver is given course guidance information at an appropriate timing both at intersections and between intersections, so that the flow of such information will not cease for an extended period of time.

Another object of the invention is to provide a navigation apparatus which enables the course to be checked continuously in such a manner that the driver will not experience anxiety with regard to whether he is following a course correctly.

In accordance with the invention these objects are achieved by the features of Claim 1.

Further preferred features and advantages of the invention will become apparent from the subordinate claims and from the following description.

### BRIEF DESCRIPTION OF THE DRAWINGS

Fig. 1 is a flowchart for describing an embodiment in a case where guidance information is outputted in accordance with the course guidance method of the navigation apparatus of the invention;
Fig. 2 is a flow chart illustrating the flow of processing for an intersection voice track output routine;
Fig. 3 is a block diagram illustrating an example of the structure of a navigation system to which the course guidance method of the inventive navigation apparatus is applied;
Figs. 4A through 4D are views illustrating an example of basic data for creating navigation data;
Figs. 5A and 5B are views illustrating an example of loop data and characterizing feature data constituting navigation data; and
Fig. 6 is a view illustrating an example of a voice track list.

An embodiment of the present invention will now be described with reference to the drawings.

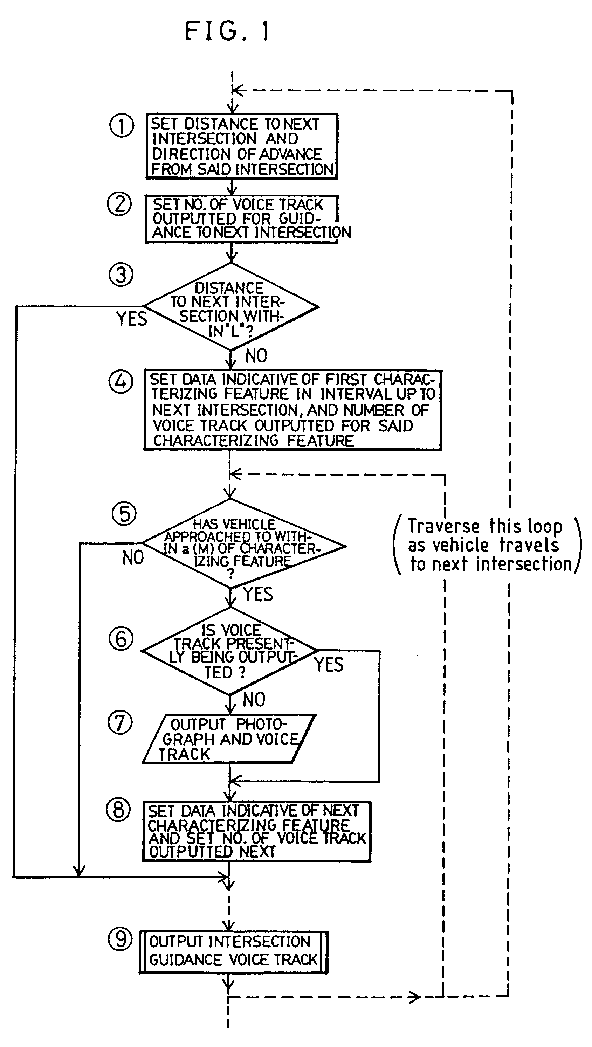

A course guidance method in the navigation apparatus of the present invention is as illustrated in the flowchart of Fig. 1. The method includes the following steps:
① First, on the basis of route data, the distance to the next intersection and data indicating the direction of advance from the next intersection are set (i.e. stored in memory). The direction of advance is set by angle data contained in the route data.
② A voice track to be outputted at the next intersection is selected on the basis of the direction of advance set at step ①, and the number of this voice track is stored in memory. This number indicates the position at which the raw data of the voice track is located.
③ It is determined whether the distance from the present location of the vehicle to the next intersection is within a predetermined value L (meters). If the distance is not within the value L, the following step (4) is executed.
④ Characterizing features between the preceding intersection and the next intersection are retrieved from characterizing feature data based on the numbers of these two intersections, data (a photograph, etc.) and a voice track indicative of a characterizing feature corresponding to a characterizing feature that is between the present vehicle position and the next intersection but closest to the present vehicle position are selected, and the numbers of, say, the photograph and voice track are stored in memory.
⑤ It is determined whether the vehicle has approached to within a predetermined distance (a threshold value) of the characterizing feature. If the vehicle has done so, then the following step ⑥ is executed.
⑥ - ⑧ On the condition that another voice track is not being outputted, the photograph and voice track of the characterizing feature are outputted, and information relating to the characterizing feature is outputted based on the photograph and voice track. The next characterizing feature data and the voice track to be outputted next are selected, and the relevant numbers are stored in memory.

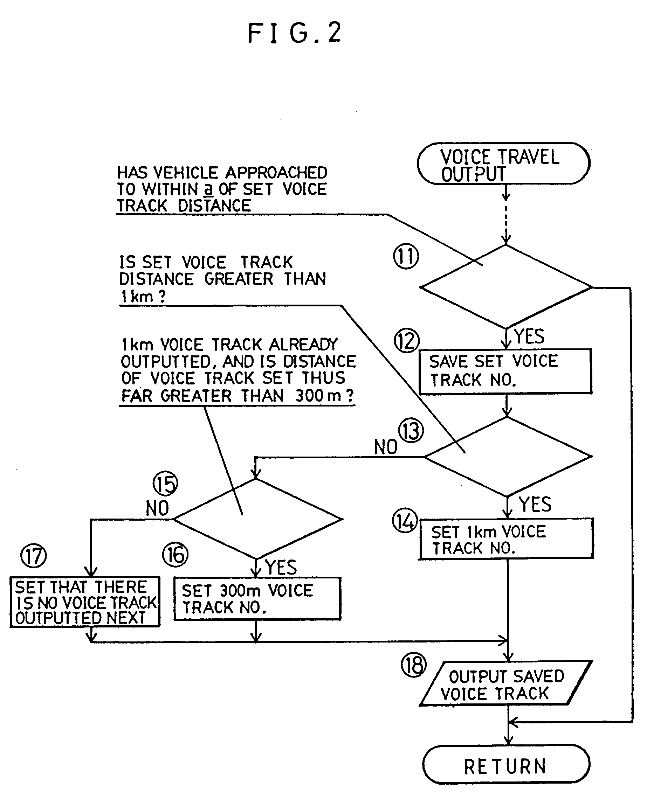

Intersection guidance is performed in accordance with the intersection guidance voice track output routine shown in Fig. 2. When the vehicle position approaches the preset voice track distance (the distance to the intersection at which the next turn is to be made) and the vehicle arrives within a meters (the threshold value) of this distance, the set voice track number is saved at this time [ 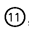 , 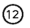 ] and the voice track number to be outputted next is set [ 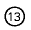 through 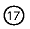 ]. Thereafter, the voice track corresponding to the voice track number already saved is outputted [ 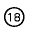 ].

Ordinarily, the processing of steps ⑤ through ⑨ [ 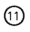 through 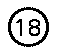 ] is repeatedly executed in accordance with travel up to the next intersection, and the processing of steps ① through ⑨ is repeatedly executed until the destination is reached.

Accordingly, and by way of example, if 5.4 km is set as the distance to the next intersection by the processing of step ① in Fig. 1, first a 5 km voice rack number is set by the processing of step ②. When the vehicle approaches the 5 km mark and the remaining distance up to the 5 km mark falls within the threshold value a (meters), the 5 km voice track signal is saved by the processing of steps 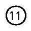 and 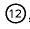 , and a 1 km voice track signal is set by the processing of steps 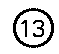 , 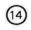 as the number of the voice track outputted next. The voice track corresponding to the 5 km voice track number is outputted by the processing of step 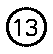 . Thereafter, the program returns to the processing of step ④ to execute the same processing, a 300 m voice track number is set by the processing of steps 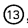 , 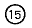 and 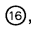 , and the voice tracks corresponding to 1 km and 300 m voice track numbers are successively outputted by the processing of step 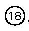 .

If the distance to the intersection at which the next turn is to be made is great, a voice track announcement corresponding to a characterizing feature to be passed en route is made when the vehicle approaches the site of the feature. Examples of such voice tracks are "YOU WILL SOON ARRIVE AT A BRIDGE" and "YOU WILL SOON ARRIVE AT A RAILROAD CROSSING". Also, a picture of the vicinity surrounding the characterizing feature is projected on the CRT display screen. Examples of characterizing features are those of a public nature, such as bridges, railroad crossings, crosswalks, underpasses, bridges over the roadway, tunnels, police stations, fire departments, post offices, schools, city offices and the like. These facilities are easy to recognize. Moreover, since they are commonly used in guidance along various courses, the memory capacity required can be reduced. In addition to the aforementioned facilities, other characterizing features include natural scenery such as mountains and trees and the nature thereof.

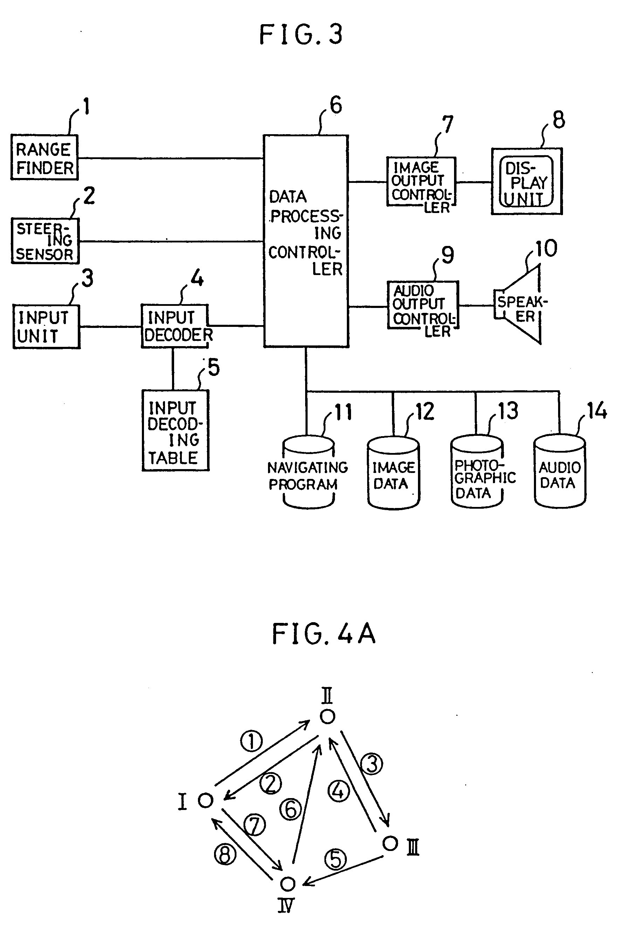

Fig. 3 illustrates an example of the system configuration of a navigation apparatus which performs the above-described course guidance.

In Fig. 3, the arrangement includes a range finder 1, a steering angle sensor 2, an input unit 3, an input decoder 4, an input decoding table 5, a data processing controller 6, an image output controller 7, a display unit 8, an audio output controller 9, a speaker 10 and files 11 through 14.

The range finder 1 measures the distance travelled by an automotive vehicle. Examples of the range finder 1 include means for detecting and counting the number of revolutions of a wheel, means for detecting acceleration and double-integrating the result, etc. Other measuring means may also be employed. The steering sensor 2 senses whether the vehicle has turned at an intersection. By way of example, the steering sensor 2 employs an optical rotary sensor or a rotating-type variable resistor attached to a rotating part of the steering wheel. The input unit 3 is a joy stick, key or touch-type panel. Alternatively, the input unit 3 can be interlocked with the screen of a display unit 8, and a key or menu can be displayed on the screen to enable inputs to be made from the screen. The input decoder 4 is adapted to decode input data from the input unit 3 while referring to the input decoding table 5. When a course is to be set, for example, the present location of the vehicle and the destination are inputted in the form of codes, whereupon the input decoder 4 effects a conversion into present location data and destination data based on the codes by referring to the input decoding table 5. Accordingly, the input decoding table 5 is set in accordance with the data inputted from the input unit 3. The data processing controller 6 is the brain of the navigation system. When a course has been selected and set at the input unit 3, the controller 6 calls and executes navigation data for this course from the file 11 storing the data. Each item of navigating data is designed to display an information map, which is in line with the course travelled, on the screen of the display unit 8, project characteristic photographs at intersections and at points along the course, display remaining distances to intersections as well as other guidance information, and give audible information in the form of voice tracks broadcast from the speaker 10. These images, photographs and audio data are stored in files 12 through 14, respectively. The outputting of images to the display unit 8 is controlled by the image output controller 7, and the outputting of audio to the speaker 10 is controlled by the audio output controller 9.

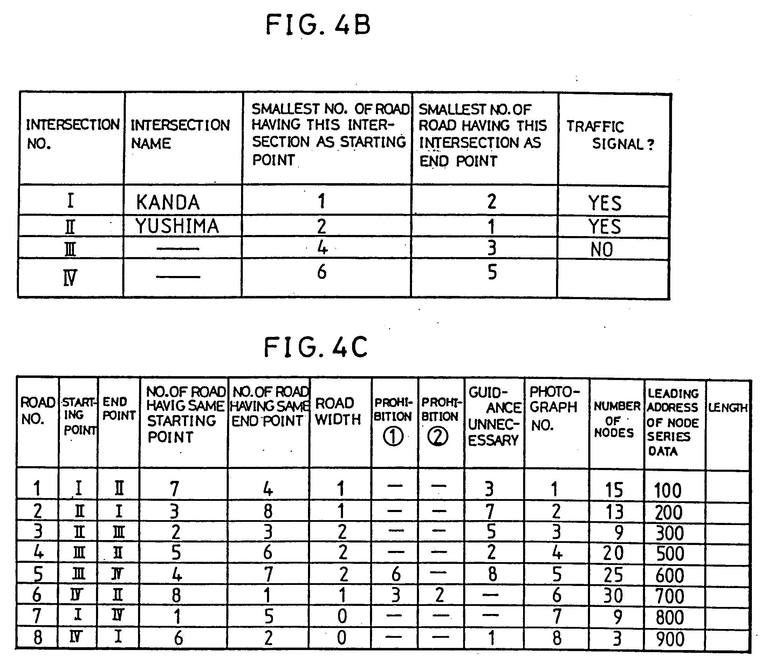

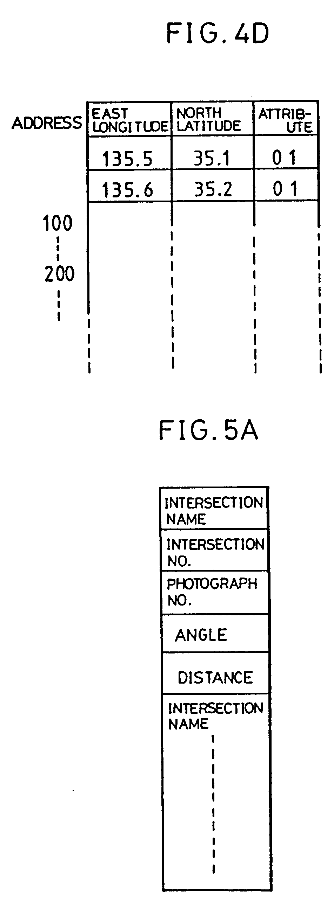

As an example, assume that a road network comprises intersection numbers I - IV and road numbers ① - ⑧, as shown in Fig. 4A. In such case, the intersection data will have the data configuration shown in Fig. 4B, the road data will have the data configuration shown in Fig. 4C, and the node series data will have the data configuration shown in Fig. 4D.

As shown in Fig. 4B, the intersection data comprises intersection names corresponding to the intersections numbers I - IV, road numbers having the smallest numbers among those roads possessing a certain intersection as a starting point, road numbers having the smallest numbers among those roads possessing a certain intersection as an end point, and information indicating whether or not a certain intersection has a traffic signal.

As shown in Fig. 4C, the road data comprises starting and end points, in the form of intersection numbers, of the road numbers ① through ⑧, the numbers of roads having the same starting point, the numbers of roads having the same end point, road width, information relating to prohibitions, information relating to guidance not required, photograph numbers, the numbers of nodes, the leading addresses of node series data, length, etc.

As shown in Fig. 4(D), the node array data comprises information relating to east longitude, north latitude, attributes and the like. The units of the road numbers comprise a plurality of nodes, as is evident from the road data. More specifically, the node data is data relating to one point on a road. If a line connecting nodes is referred to as an arc, a road is expressed by connecting each of a plurality of node arrays by arcs. For example, with regard to road number ①, the road comprises 15 nodes and the leading address of the node array data is 100, based on the road data. Therefore, road number ① is composed of node data having addresses 100 to 114.

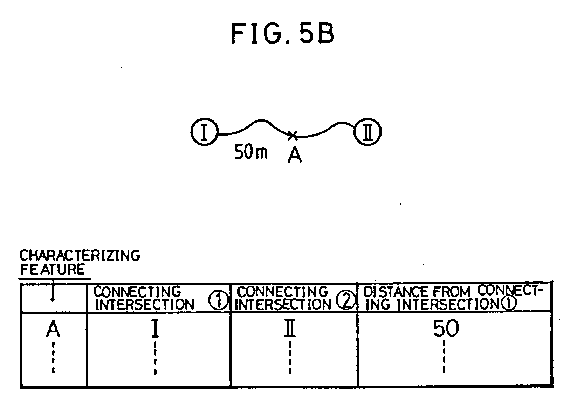

Let us take intersection number I as an example. For a course having this intersection as a starting point, first road number ① is retrieved from the starting point information of the intersection point data, then road number ⑦ is retrieved from the road data relating to the road number ①, namely from the column reading "NO. OF ROAD HAVING SAME STARTING POINT". Since the same information for road number ⑦ will, in converse fashion, lead to retrieval of road number ①, one can determine that there are no other road numbers available as peripheral roads. The same will hold true with regard to end points. Further, since road number ⑥ will be prohibited in case of road number ⑤ in the road data, the vehicle will not be able to enter road number ⑥ from road number ⑤ at the intersection number IV shown in Fig. 4A because turns are prohibited at this intersection. The only road that can be entered is the road number ⑧. Accordingly, guidance to road number ⑧ is unnecessary. By providing the road data with road numbers indicative of roads that cannot be entered because of prohibited turns and road numbers indicative of roads for which guidance is not required, the necessary information storage capacity can be reduced and route retrieval can be facilitated. By relying upon such data, peripheral roads from an intersection (with the exception of roads for which entry is forbidden because of prohibited turns or the like) are retrieved, road width, the need or lack of need for guidance and other conditions necessary for computing an ideal route are set, and the optimum route from the designated starting point to the destination is retrieved. In accordance with the retrieved ideal route, route data shown in Fig. 5A and characterizing feature data shown in Fig. 5B are created as navigation data. The route data comprises the intersections, in order of nearness, from the starting point to the destination along the retrieved optimum route. The characterizing feature data relates to the characterizing features between intersections.

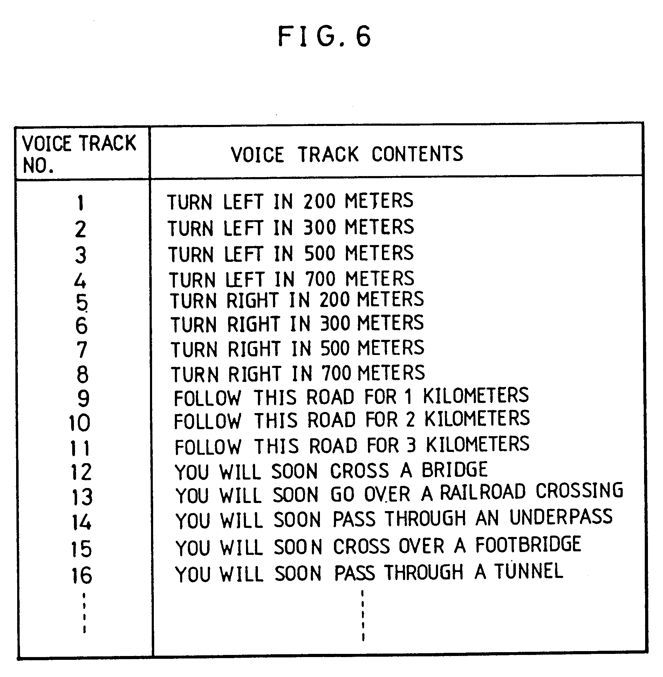

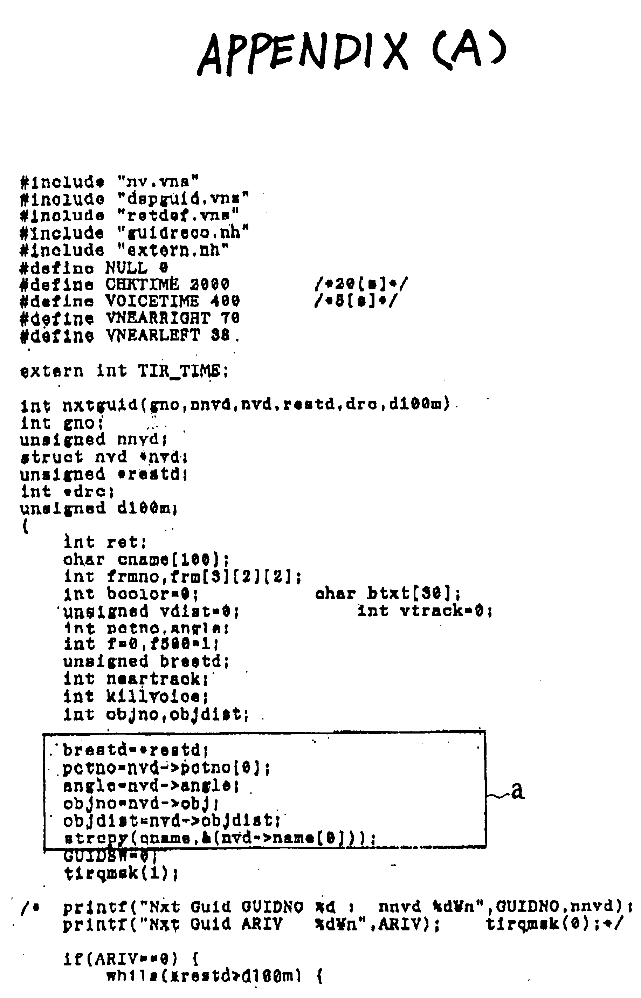

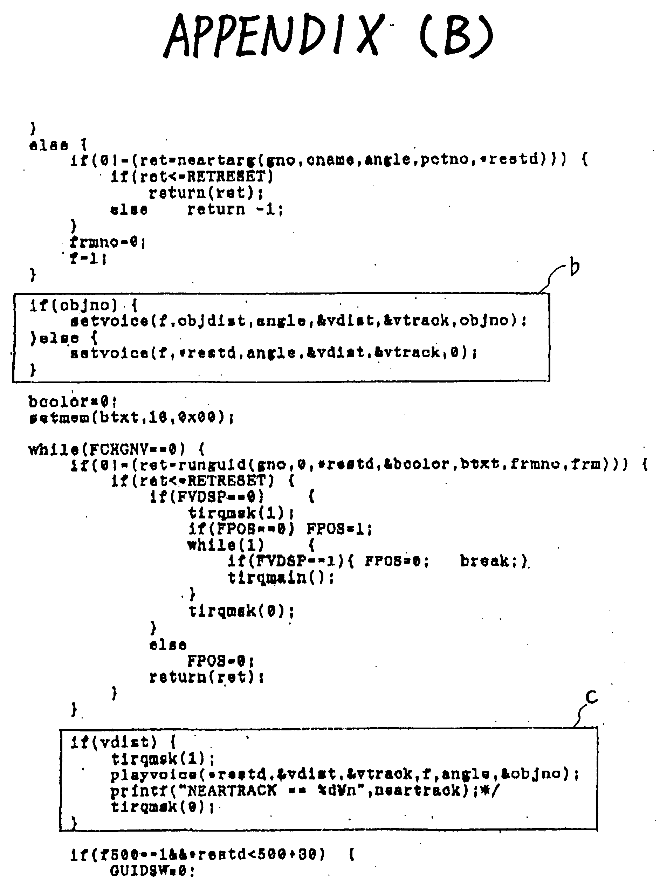

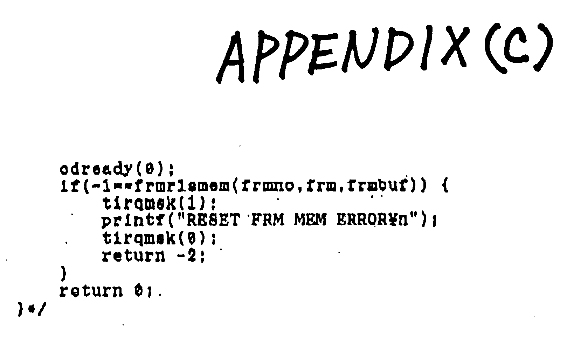

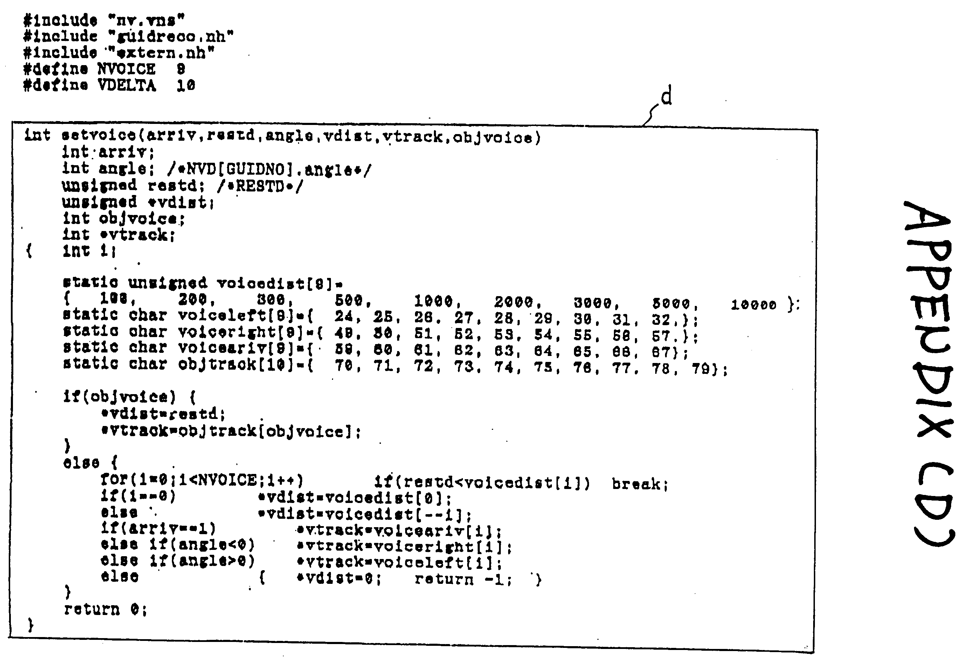

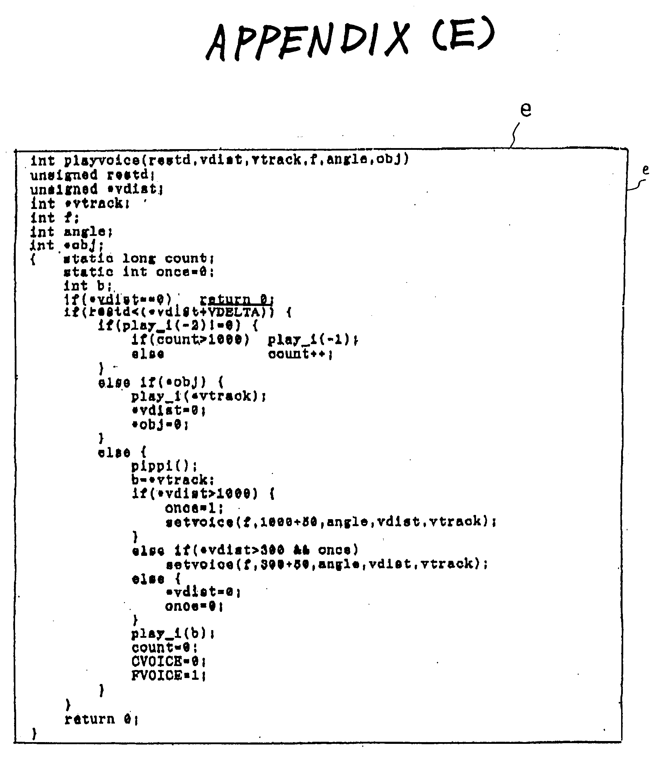

In accordance with the above-described navigation system, the driver selects a course by entering his present location and desired destination from the input unit 3 before travelling. When this has been accomplished, the data processing controller 6 reads and executes the navigating program in file 1 corresponding to this course. In accordance with the course, and on the basis of the measurement information from the range finder 1 and steering sensor 2, the aforementioned execution of the data determines the vehicle, displays the course information map, present location and the like, and informs the driver of characteristic features and intersections along the route, via the display unit 8 and speaker 10. The navigation data includes which data are to be used under what conditions, these data being taken from the files 12 through 14 storing the data for the abovementioned input outputs and the data for the voice track outputs. An example of a voice track list is as shown in Fig. 6.

The present invention is not limited to the embodiment described above but can be modified in various ways. For example, though information relating to a characterizing feature is outputted in the form of a picture and voice track in the foregoing embodiment, it is possible to adopt an arrangement in which only the picture or voice track is used, depending upon the navigation conditions at the time. Furthermore, in a case where a large number of proper nouns are involved, a large memory capacity will be required since there will be little opportunity for such information to be shared among a variety of courses. Accordingly, an arrangement can be adopted in which such information is distributed between photographs and voice tracks in a suitable manner.

Thus, in accordance with the present invention as set forth above, characterizing features serving as landmarks in the vicinity of the present location of a travelling vehicle are indicated to the driver in the form of voice tracks and images. Therefore, even if it is a long distance to the next intersection, the driver is capable of readily verifying whether the course being travelled is correct. This makes it possible for the driver to drive the vehicle without anxiety. In addition, since the information relating to the characterizing features is provided in the form of voice tracks and images, it is possible for the driver to easily understand the information even while he is in the act of driving.

### DESCRIPTION OF APPENDIX

The attached material is an example of specific navigation data in C language to which the present invention is applied. For example:
a is a step for setting the distance to the next intersection, namely a step corresponding to the processing of step 1 shown in Fig. 1;
b is steps 2 to 4 shown in Fig. 1;
c is steps 5 ∼ shown in Fig. 1;
d is a routine for the above-mentioned b; and
e is a routine for the above-mentioned c.

## Claims

1. A navigation apparatus for use in navigating a vehicle along a preset course, comprising a map data base (11) having intersection data and road data, corresponding to a plurality of points along said preset course at which the vehicle must be guided to follow the course; a characteristic feature data base (12-14) storing data of characteristic features corresponding to said intersection data and road data, for providing guidance information; means (3) for inputting departure and destination points of said course; course setting means for determining from said data of the map data base a course between departure and destination points provided via said inputting means, means (1) for measuring distance travelled by the vehicle; a steering angle sensor (2) responsive to turning of the vehicle to enable calculation of the position of the vehicle on said course; guidance information output means (7,8,9,10); means for determining a current position of said vehicle on said course from signals received from said distance measuring means (1) and said steering angle sensor (2); means for determining whether the distance remaining between said current position and a next intersection on said course is within a predetermined value; first means for providing to said guidance information output means (7,8,9,10) guidance information concerning said next intersection when said remaining distance determining means has determined that said remaining distance is within said predetermined value, and second means for providing to said guidance information output means (7,8,9,10) data from said characteristic feature data base (12-14) and corresponding to said current position, when said remaining distance determining means has determined that said remaining distance is greater than said predetermined value.

2. A navigation apparatus according to Claim 1, characterized in that said course setting means, said current position determining means, said remaining distance determining means, said first information providing means and said second information providing means are all comprised by a data processing controller (6), adapted to read data from said map data base (11) and said memory means (12-14), to receive signals from said input means (3), from said distance sensor means (7) and from said steering angle sensor (3), and to provide a data output to said guidance information output means (7,8,9,10).

3. A navigation apparatus according to claim 1 or 2, characterized in that it further comprises third means for providing to said guidance information output means, distance information corresponding to predetermined distances determined by said remaining distance determining means and greater than a predetermined value, and selection means for selectively enabling said second or third information providing means to provide corresponding information to said output means.

4. A navigation apparatus according to any one of claims 1-3, wherein said guidance information output means includes an image display means (8) and said characteristic feature data base (12) includes image data.

## Patentansprüche

1. Navigationseinrichtung zur Verwendung beim Führen eines Fahrzeuges auf einer vorher festgelegten Fahrtroute, die aufweist: eine Kartendatenbasis (11) mit Kreuzungsdaten und Straßendaten entsprechend einer Vielzahl von Punkten auf der vorher festgelegten Fahrtroute, auf der das Fahrzeug geführt werden muß, um der Fahrtroute zu folgen; eine Datenbasis der charakteristischen Merkmale (12-14), die Daten von charakteristischen Merkmalen entsprechend den Kreuzungsdaten und Straßendaten zum Bereitstellen von Führungsinformationen speichert; eine Einrichtung (3) zum Eingeben eines Ausgangs- und eines Zielpunktes der Fahrtroute; eine Fahrtroutenfestlegungseinrichtung, um anhand der Daten der Kartendatenbasis eine Fahrtroute zwischen einem Ausgangs- und einem Zielpunkt zu bestimmen, die über die Eingabeeinrichtung bereitgestellt werden; eine Einrichtung (1) zum Messen der vom Fahrzeug zurückgelegten Entfernung; einen Lenkwinkelsensor (2), der auf Abbiegen des Fahrzeuges anspricht, um die Berechnung der Position des Fahrzeuges auf der Fahrtroute zu ermöglichen; Leitinformationsausgabeeinrichtungen (7, 8, 9, 10); eine Einrichtung zum Bestimmen einer augenblicklichen Position des Fahrzeuges auf der Fahrtroute anhand von Signalen, die von der Entfernungsmeßeinrichtung (1) und dem Lenkwinkelsensor (2) kommen; eine Einrichtung zum Bestimmen, ob die verbleibende Entfernung zwischen der augenblicklichen Position und einer nächsten Kreuzung auf der Fahrtroute innerhalb eines vorgegebenen Wertes liegt; eine erste Einrichtung, um Leitinformationen für die nächste Kreuzung an die Leitinformationsausgabeeinrichtungen (7, 8, 9, 10) zu übergeben, wenn die Einrichtung zum Bestimmen der verbleibenden Entfernung festgestellt hat, daS die verbleibende Entfernung innerhalb des vorgegebenen Wertes liegt, und eine zweite Einrichtung, um Daten aus der Datenbasis für charakteristische Merkmale (12-14) und entsprechend der augenblicklichen Position an die Leitinformationsausgabeeinrichtungen (7, 8, 9, 10) zu übergeben, wenn die Einrichtung zum Bestimmen der verbleibenden Entfernung festgestellt hat, daß die verbleibende Entfernung größer ist als der vorgegebene Wert.

2. Navigationseinrichtung nach Anspruch 1, dadurch gekennzeichnet, daS die Fahrtroutenfestlegungseinrichtung, die Einrichtung zum Bestimmen der augenblicklichen Position, die Einrichtung zum Bestimmen der verbleibenden Entfernung, die erste Einrichtung zum Übergeben von Informationen und die zweite Einrichtung zum Übergeben von Informationen alle Teile eines Datenverarbeitungscontrollers (6) sind, der geeignet ist, Daten aus der Kartendatenbasis (11) und den Speichereinrichtungen (12-14) zu lesen, um Signale von der Eingabeeinrichtung (3), von der Entfernungssensoreinrichtung (7) und von dem Lenkwinkelsensor (3) zu empfangen und um Daten bereitzustellen, die an die Leitinformationsausgabeeinrichtungen (7, 8, 9, 10) ausgegeben werden.

3. Navigationseinrichtung nach Anspruch 1 oder 2, dadurch gekennzeichnet, daß sie weiter aufweist: eine dritte Einrichtung, um Entfernungsinformationen, die den vorgegebenen Entfernungen, die durch die Einrichtung zum Bestimmen der verbleibenden Entfernung festgelegt werden, entsprechen und die größer sind als der vorgegebene Wert, an die Leitinformationsausgabeeinrichtungen zu übergeben, und eine Wahleinrichtung, um eine zweite oder dritte Einrichtung zum Übergeben von Informationen selektiv zu befähigen, die entsprechenden Informationen an die Ausgabeeinrichtungen zu übergeben.

4. Navigationseinrichtung nach einem der Ansprüche 1 bis 3, wobei die Leitinformationsausgabeeinrichtung eine Bildanzeigeeinrichtung (8) und die Datenbasis für charakteristische Merkmale (12) Bilddaten aufweist.

## Revendications

1. Appareil de navigation destiné à être utilisé pour diriger un véhicule le long d'un trajet préétabli, comprenant une base (11) de données cartographiques comportant des données d'intersection et des données de route correspondant à une pluralité de points situés le long dudit trajet préétabli et sur lesquels le véhicule doit être guidé pour suivre ce trajet; une base (12-14) de données de particularités caractéristiques stockant des données de particularités caractéristiques correspondant au-dites données d'intersection et auxdites données de route pour fournir des informations de guidage; des moyens (3) pour entrer les points de départ et de destination dudit trajet; des moyens d'établissement de trajet pour déterminer à partir desdites données de la base de données cartographiques un trajet entre les points de départ et de destination fournis par l'intermédiaire du moyen d'entrée, des moyens (1) pour mesurer la distance parcourue par le véhicule; un capteur (2) de détection d'angle de direction sensible aux virages du véhicule pour permettre le calcul de la position du véhicule sur ledit trajet; des moyens (7, 8, 9, 10) de sortie d'informations de guidage; des moyens pour déterminer la position actuelle du véhicule sur ledit trajet à partir des signaux reçus des moyens (1) de mesure de distance et du capteur (2) de détection d'angle de direction; des moyens pour déterminer si oui ou non la distance restante entre la position actuelle et l'intersection suivante sur ledit trajet est égale à une valeur prédéterminée; des premiers moyens pour fournir aux moyens (7, 8, 9, 10) de sortie d'information de guidage des informations de guidage concernant la prochaine intersection lorsque les moyens de détermination de distance restante ont déterminé que la distance restante est égale à ladite valeur prédéterminée, et des seconds moyens pour fournir aux moyens (7, 8, 9, 10) de sortie d'information de guidage des données à partir de la base (12-14) de données de particularités caractéristiques et correspondant à ladite position actuelle, lorsque les moyens de détermination de distance restante ont déterminé que la distance restante est supérieure à ladite valeur prédéterminée.

2. Appareil de navigation selon la revendication 1, caractérisé en ce que les moyens d'établissement de trajet, les moyens de détermination de position actuelle, les moyens de détermination de distance restante, les premiers moyens fournissant des informations et les seconds moyens fournissant des informations sont tous constitués par un dispositif (6) de commande de traitement de données adapté pour extraire des données de la base (11) de données cartographiques et des moyens de mémorisation (12-14) pour recevoir les signaux des moyens d'entrée (3) du capteur (7) de détection de distance et du capteur (3) de détection d'angle de direction, et pour fournir des données de sortie aux moyens (7, 8, 9, 10) de sortie d'informations de guidage.

3. Appareil de navigation selon la revendication 1 ou 2, caractérisé en ce qu'il comprend, en outre, des troisièmes moyens pour fournir aux moyens de sortie d'informations de guidage, des informations de distance correspondant à des distances prédéterminées déterminées par les moyens de détermination de distance restante et supérieures à une valeur prédéterminée, et des moyens de sélection pour permettre, de façon sélective, auxdits seconds ou troisièmes moyens de fourniture d'informations de fournir aux moyens de sortie des informations correspondantes.

4. Appareil de navigation selon l'une quelconque des revendications 1-3, dans lequel les moyens de sortie d'informations de guidage comprennent un moyen (8) d'affichage d'image, et la base (12) de données de particularités caractéristiques comprend des données d'image.
